(19) **Europäisches Patentamt / European Patent Office / Office européen des brevets**

(11) **EP 4 195 202 B1**

(12) **EUROPEAN PATENT SPECIFICATION**

(45) Date of publication and mention of the grant of the patent:
**13.11.2024  Bulletin 2024/46**

(21) Application number: **21872907.7**

(22) Date of filing: **23.09.2021**

(51) International Patent Classification (IPC):
**G10L 17/04** (2013.01)    **G10L 17/14** (2013.01)
**G06F 21/32** (2013.01)    **G10L 15/04** (2013.01)
**G10L 15/22** (2006.01)    **G10L 17/12** (2013.01)
**G06F 1/16** (2006.01)    **G10L 17/22** (2013.01)

(52) Cooperative Patent Classification (CPC):
**G10L 17/04; G06F 1/16; G06F 21/32; G10L 17/22**

(86) International application number:
**PCT/KR2021/012962**

(87) International publication number:
**WO 2022/065879 (31.03.2022 Gazette 2022/13)**

(54) **DEVICE FOR LEARNING SPEAKER AUTHENTICATION OF REGISTERED USER FOR VOICE RECOGNITION SERVICE, AND METHOD FOR OPERATING SAME**

VORRICHTUNG ZUM LERNEN DER SPRECHERAUTHENTIFIZIERUNG EINES REGISTRIERTEN BENUTZERS FÜR EINEN SPRACHERKENNUNGSDIENST UND VERFAHREN ZUM BETRIEB DAVON

DISPOSITIF D'APPRENTISSAGE D'AUTHENTIFICATION DE LOCUTEUR D'UN UTILISATEUR ENREGISTRÉ POUR SERVICE DE RECONNAISSANCE VOCALE, ET SON PROCÉDÉ DE FONCTIONNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **24.09.2020  KR 20200124135**

(43) Date of publication of application:
**14.06.2023  Bulletin 2023/24**

(73) Proprietor: **Samsung Electronics Co., Ltd.**
**Suwon-si, Gyeonggi-do 16677 (KR)**

(72) Inventors:
• **JEONG, Jaehoon**
  **Suwon-si Gyeonggi-do 16677 (KR)**
• **SONOWAL, Sukanya**
  **Suwon-si Gyeonggi-do 16677 (KR)**
• **HAN, Kyuchun**
  **Suwon-si Gyeonggi-do 16677 (KR)**
• **KANG, Shinjae**
  **Suwon-si Gyeonggi-do 16677 (KR)**
• **LEE, Sangho**
  **Suwon-si Gyeonggi-do 16677 (KR)**

(74) Representative: **Nederlandsch Octrooibureau**
**P.O. Box 29720**
**2502 LS The Hague (NL)**

(56) References cited:
  **KR-A- 20160 100 765    KR-A- 20190 134 366**
  **KR-A- 20200 100 332    US-A1- 2015 081 295**
  **US-A1- 2020 160 869    US-B1- 10 013 984**
  **US-B2- 9 262 612**

## Description

### Technical Field

The disclosure relates to a device for training speaker verification of a registered user for providing a voice recognition service, and a method thereof.

### Background Art

Recently, electronic devices providing a voice recognition function are increasing. An electronic device which has recognized a user utterance may execute a function mounted in the electronic device (e.g., an application installed in the electronic device) so as to not only provide a voice recognition service to a user but also provide a related service to various third-party service providers.

A personal electronic device which is to be secured provides a user registration procedure in order to provide a voice recognition service to a registered user only.

US 9 262 612 B2, 16 February 2016, is about a device configured to receive speech input from a user. The speech input can include a command for accessing a restricted feature of the device. The speech input can be compared to a voiceprint (e.g., text-independent voiceprint) of the user's voice to authenticate the user to the device. Responsive to successful authentication of the user to the device, the user is allowed access to the restricted feature without the user having to perform additional authentication steps or speaking the command again. If the user is not successfully authenticated to the device, additional authentication steps can be request by the device (e.g., request a password).

### Disclosure of Invention

### Technical Problem

Embodiments of the disclosure provide electronic device providing a voice recognition service providing a registered user with a voice recognition service, the accuracy of which is high, while simplifying a user registration procedure for voice recognition service provision and mitigating user inconveniences. For example, in order for an electronic device to simplify a voice input procedure for user registration and accurately verify a voice of a registered user, embodiments of the disclosure may train a speaker verification model by securing voice data of the user.

### Solution to Problem

The solution is set out in the appended set of claims.

### Advantageous Effects of Invention

An electronic device and an operation method thereof according to various example embodiments of the disclosure can train a speaker verification model by effectively securing voice data of a registered user for a voice recognition service.

An electronic device and an operation method thereof according to various example embodiments of the disclosure can mitigate user inconveniences by simplifying a voice input procedure for user registration, and can update a speaker verification model by securing user voice data for verifying a registered user, whereby the accuracy of speaker verification can be increased.

### Brief Description of Drawings

The above and other aspects, features and advantages of certain embodiments of the present disclosure will be more apparent from the following detailed description, taken in conjunction with the accompanying drawings, in which:

FIG. 1 is a block diagram illustrating an example integrated intelligence system according to various embodiments;
FIG. 2 is a diagram illustrating an example form in which information on a relationship between a concept and an action is stored in a database according to various embodiments;
FIG. 3 is a diagram illustrating a user terminal which displays a screen of processing a voice input received through an intelligence app according to various embodiments;
FIG. 4 is a block diagram illustrating an electronic device in a network environment according to various embodiments;
FIG. 5 is a block diagram illustrating an example configuration of an electronic device according to various embodiments;

FIGS. 6, 7 and 8 are flowcharts illustrating example operations of an electronic device according to various embodiments;

FIGS. 9A, 9B, 9C and 9D are diagrams illustrating example user registration operations of invoking a voice recognition service according to various embodiments;

FIGS. 10A and 10B are diagrams illustrating examples of an operation of acquiring a voice of a registered voice of an electronic device according to various embodiments;

FIGS. 11A, 11B and 11C are diagrams illustrating examples of an operation of acquiring a voice of a registered user of an electronic device according to various embodiments; and

FIG. 12 is a diagram illustrating an example of an operation of acquiring a voice of a registered user of an electronic device according to various embodiments.

**Best Mode for Carrying out the Invention**

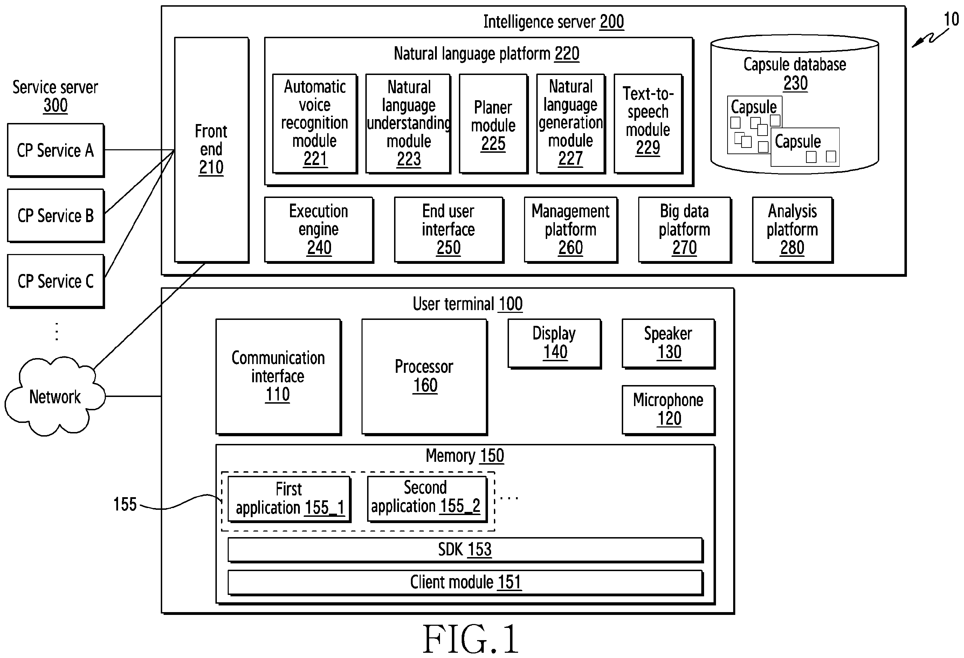

FIG. 1 is a block diagram illustrating an example integrated intelligence system according to various embodiments. Referring to FIG. 1, an integrated intelligence system 10 of an embodiment may include a user terminal 100, an intelligence server 200, and a service server 300.

The user terminal 100 of an embodiment may be a terminal device (or an electronic device) which can be connected to the Internet, and may include, for example, and without limitation, a mobile phone, a smartphone, a personal digital assistant (PDA), a laptop computer, a television (TV), a home appliance, a wearable device, a head mounted device (HMD), a smart speaker, or the like.

According to an embodiment, the user terminal 100 may include a communication interface (e.g., including communication circuitry) 110, a microphone 120, a speaker 130, a display 140, a memory 150, and/or a processor (e.g., including processing circuitry) 160. The above-enumerated components may be operatively or electrically connected to each other.

The communication interface 110 of an embodiment may include various communication circuitry and be configured to be connected to an external device and transmit or receive data to or from the external device. The microphone 120 of an embodiment may receive a sound (e.g., a user utterance) and convert the sound into an electrical signal. The speaker 130 of an embodiment may output an electrical signal as a sound (e.g., a voice). The display 140 of an embodiment may be configured to display an image or video. The display 140 of an embodiment may also display a graphical user interface (GUI) of an executed app (or an application program).

The memory 150 of an embodiment may store a client module 151, a software development kit (SDK) 153, and multiple apps (e.g., applications) 155. The client module 151 and the SDK 153 may configure a framework (e.g., a solution program) for performing a universal function. In addition, the client module 151 or the SDK 153 may configure a framework for processing a voice input.

The multiple apps 155 stored in the memory 150 of an embodiment may correspond to a program for performing a designated function. According to an embodiment, the multiple apps 155 may include a first app 155_1 and a second app 155_2. According to an embodiment, each of the multiple apps 155 may include multiple actions for performing a designated function. For example, the apps may include an alarm app, a message app, and/or a schedule app. According to an embodiment, the multiple apps 155 may be executed by the processor 160 and sequentially execute at least some of the multiple actions.

The processor 160 of an embodiment may include various processing circuitry and control an overall operation of the user terminal 100. For example, the processor 160 may be electrically connected to the communication interface 110, the microphone 120, the speaker 130, and the display 140 to perform a designated operation.

The processor 160 of an embodiment may also execute a program stored in the memory 150 to perform a designated function. For example, the processor 160 may execute at least one of the client module 151 or the SDK 153 to perform a subsequent operation for processing a voice input. For example, the processor 160 may control operations of the multiple apps 155 through the SDK 153. A below operation described as an operation of the client module 151 or the SDK 153 may be an operation by the execution of the processor 160.

The client module 151 of an embodiment may receive a voice input. For example, the client module 151 may receive a voice signal corresponding to a user utterance which is detected through the microphone 120. The client module 151 may transmit the received voice input to the intelligence server 200. The client module 151 may transmit state information of the user terminal 100 to the intelligence server 200, together with the received voice input. The state information may be, for example, app execution state information.

The client module 151 of an embodiment may receive a result corresponding to the received voice input. For example, when the result corresponding to the received voice input can be calculated by the intelligence server 200, the client module 151 may receive the result corresponding to the received voice input from the intelligence server 200. The client module 151 may display the received result on the display 140.

The client module 151 of an embodiment may receive a plan corresponding to the received voice input. The client module 151 may display, on the display 140, the result of executing multiple actions of an app according to the plan. For example, the client module 151 may sequentially display the result of execution of the multiple actions on the display. In another example, the user terminal 100 may display only a part of the result (e.g., a result of the last operation) of execution of the multiple actions, on the display.

According to an embodiment, the client module 151 may receive a request for obtaining information necessary to obtain the result corresponding to a voice input, from the intelligence server 200. According to an embodiment, in response to the request, the client module 151 may transmit the necessary information to the intelligence server 200.

The client module 151 of an embodiment may transmit result information of executing multiple actions according to a plan, to the intelligence server 200. Using the result information, the intelligence server 200 may identify that the received voice input is correctly processed.

The client module 151 of an embodiment may include a voice recognition module. According to an embodiment, the client module 151 may recognize a voice input of performing a restricted function, through the voice recognition module. For example, the client module 151 may perform an intelligence app for processing a voice input for performing a systematic operation through a designated input (e.g., Wake up!).

The intelligence server 200 of an embodiment may receive information related with a user voice input from the user terminal 100 through a communication network. According to an embodiment, the intelligence server 200 may change data related to the received voice input to text data. According to an embodiment, the intelligence server 200 may generate a plan for performing a task corresponding to the user voice input using the text data.

According to an embodiment, the plan may be generated by an artificial intelligence (AI) system. The artificial intelligence system may include a rule-based system, or may include a neural network-based system (e.g., a feedforward neural network (FNN) and a recurrent neural network (RNN)). The artificial intelligence system may be either a combination of the aforementioned systems or an artificial intelligence system different therefrom. According to an embodiment, the plan may be selected from a set of predefined plans, or may be generated in real time in response to a user request. For example, the artificial intelligence system may select at least one plan among multiple predefined plans.

The intelligence server 200 of an embodiment may transmit the result of the generated plan to the user terminal 100, or transmit the generated plan to the user terminal 100. According to an embodiment, the user terminal 100 may display the result of the plan on the display. According to an embodiment, the user terminal 100 may display the result of executing an operation according to the plan on the display.

The intelligence server 200 of an embodiment may include a front end 210, a natural language platform 220, a capsule database (DB) 230, an execution engine 240, an end user interface 250, a management platform 260, a big data platform 270, and/or an analytic platform 280.

The front end 210 of an embodiment may receive a voice input received from the user terminal 100. The front end 210 may transmit a response corresponding to the voice input.

According to an embodiment, the natural language platform 220 may include an automatic speech recognition module (ASR module) 221, a natural language understanding module (NLU module) 223, a planner module 225, a natural language generator module (NLG module) 227, and/or a text-to-speech module (TTS module) 229, each of which may include various processing circuitry and/or executable program instructions.

The automatic speech recognition module 221 of an embodiment may convert a voice input received from the user terminal 100 into text data. Using the text data of the voice input, the natural language understanding module 223 of an embodiment may identify a user's intention. For example, the natural language understanding module 223 may identify the user's intention by performing syntactic analysis or semantic analysis. The natural language understanding module 223 of an embodiment may identify a meaning of a word extracted from the voice input using a linguistic feature (e.g., syntactic factor) of a morpheme or phrase, and match the identified meaning of the word with the intention, so as to determine the user's intention.

The planner module 225 of an embodiment may generate a plan using the intention and the parameter determined by the natural language understanding module 223. According to an embodiment, the planner module 225 may determine multiple domains necessary to perform a task, according to the determined intention. The planner module 225 may determine multiple actions included in each of the multiple domains which are determined according to on the intention. According to an embodiment, the planner module 225 may determine a parameter necessary to execute the determined multiple actions, or a result value output by the execution of the multiple actions. The parameter and the result value may be defined with a concept of a designated form (or class). Accordingly, the plan may include the multiple actions determined by the user's intention, and multiple concepts. The planner module 225 may determine relationships between the multiple actions and the multiple concepts operationally (or hierarchically). For example, the planner module 225 may determine, according to the multiple concepts, an execution sequence of the multiple actions that are determined according to the user's intention. In other words, the planner module 225 may determine the execution sequence of the multiple actions according to the parameter necessary for execution of the multiple actions and the result output by execution of the multiple actions. Accordingly, the planner module 225 may generate a plan including association information (e.g., ontology) between the multiple actions and the multiple concepts. The planner module 225 may generate the plan using information stored in a capsule database 230 in which a set of relationships between the concepts and the actions is stored.

The natural language generator module 227 of an embodiment may change designated information to a text form. The information changed to the text form may be in a form of a natural language speech. The text-to-speech conversion module 229 of an embodiment may change the information in the text form to information in a voice form.

According to an embodiment, a partial function or the whole function of the natural language platform 220 may be also implemented in the user terminal 100.

The capsule database 230 may store information on relationships between multiple concepts and actions corresponding to multiple domains. A capsule of an embodiment may include multiple action objects (or operation information) and concept objects (or concept information) which are included in a plan. According to an embodiment, the capsule database 230 may store multiple capsules in a form of a concept action network (CAN). According to an embodiment, the multiple capsules may be stored in a function registry included in the capsule database 230.

The capsule database 230 may include a strategy registry in which strategy information necessary to determine a plan corresponding to a voice input is stored. When there are multiple plans corresponding to the voice input, the strategy information may include reference information for determining one plan from the multiple plans. According to an embodiment, the capsule database 230 may include a follow up registry in which follow-up action information for proposing a follow-up action to a user in a designated condition is stored. The follow-up action may include, for example, a follow-up speech. According to an embodiment, the capsule database 230 may include a layout registry in which layout information of information output through the user terminal 100 is stored. According to an embodiment, the capsule database 230 may include a vocabulary registry in which vocabulary information included in capsule information is stored. According to an embodiment, the capsule database 230 may include a dialog registry in which information on a dialog (or an interaction) with a user is stored. The capsule database 230 may update the stored object using a developer tool. The developer tool may include, for example, a function editor for updating an action object or a concept object. The developer tool may include a vocabulary editor for updating a vocabulary. The developer tool may include a strategy editor for generating and registering a strategy which determines a plan. The developer tool may include a dialog editor for generating a dialog with a user. The developer tool may include a follow up editor for activating a follow up goal and editing a follow up speech which provides a hint. The follow up goal may be determined according to a currently set goal, a user's preference, or an environmental condition. In an embodiment, the capsule database 230 may be also implemented in the user terminal 100.

The execution engine 240 of an embodiment may obtain the result using the generated plan. The end user interface 250 may transmit the obtained result to the user terminal 100. Accordingly, the user terminal 100 may receive the result and provide the received result to a user. The management platform 260 of an embodiment may manage information used in the intelligence server 200. The big data platform 270 of an embodiment may collect a user's data. The analytic platform 280 of an embodiment may manage a quality of service (QoS) of the intelligence server 200. For example, the analytic platform 280 may manage a component and a processing speed (or efficiency) of the intelligence server 200.

The service server 300 of an embodiment may provide the user terminal 100 with a designated service (e.g., a food order or a hotel reservation). According to an embodiment, the service server 300 may be a server managed by a third party. The service server 300 of an embodiment may provide the intelligence server 200 with information for generating a plan corresponding to a received voice input. The provided information may be stored in the capsule database 230. In addition, the service server 300 may provide the intelligence server 200 with information on the result of the plan.

In the above-described integrated intelligence system 10, in response to a user input, the user terminal 100 may provide the user with various intelligence services. The user input may include, for example, an input through a physical button, a touch input, or a voice input.

In an embodiment, the user terminal 100 may provide a voice recognition service through an intelligence app (or a voice recognition app) stored therein. In this case, for example, the user terminal 100 may recognize a user utterance or a voice input received through the microphone, and provide the user with a service corresponding to the recognized voice input.

In an embodiment, the user terminal 100 may perform a designated operation independently, or together with the intelligence server and/or the service server according to a received voice input. For example, the user terminal 100 may execute an app corresponding to the received voice input, and perform a designated operation through the executed app.

In an embodiment, when the user terminal 100 provides a service together with the intelligence server 200 and/or the service server, the user terminal 100 may detect a user utterance using the microphone 120, and generate a signal (or voice data) corresponding to the detected user utterance. The user terminal may transmit the voice data to the intelligence server 200 using the communication interface 110.

As a response to a voice input received from the user terminal 100, the intelligence server 200 according to an embodiment may generate a plan for performing a task corresponding to the voice input, or the result of performing an operation according to the plan. The plan may include, for example, multiple actions for performing a task corresponding to a user's voice input, and multiple concepts related to the multiple actions. The concepts may be obtained by defining a parameter input by execution of the multiple actions, or a result value output by the execution of the multiple actions. The plan may include association information between the multiple actions and the multiple concepts.

The user terminal 100 of an embodiment may receive the response using the communication interface 110. The user terminal 100 may output a voice signal generated within the user terminal 100 to the outside using the speaker 130, or output an image generated within the user terminal 100 to the outside using the display 140.

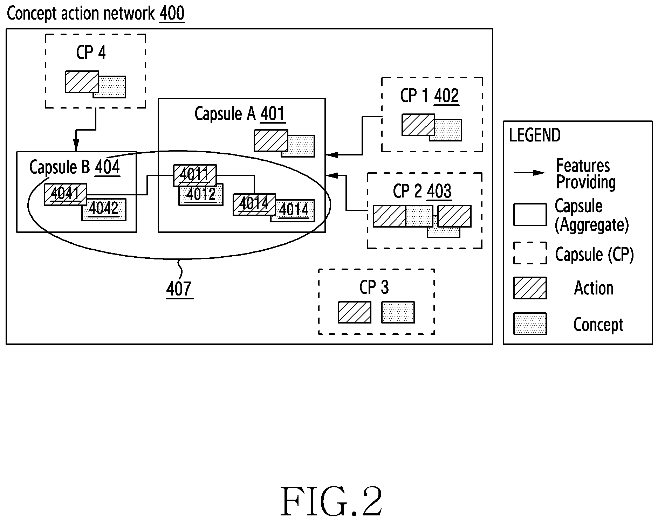

FIG. 2 is a diagram illustrating an example form in which information on a relationship between a concept and an action is stored in a database according to various embodiments.

A capsule database (e.g., the capsule database 230) of the intelligence server 200 may store a capsule in the form of a concept action network (CAN) 400. The capsule database may store an action for processing a task corresponding to a user's voice input and a parameter necessary for the action, in the form of the concept action network (CAN).

The capsule database may store multiple capsules (capsule A 401 and capsule B 404) corresponding to multiple domains (e.g., applications), respectively. According to an embodiment, one capsule (e.g., capsule A 401) may correspond to one domain (e.g., a location (geo) and an application). In addition, one capsule may correspond to at least one service provider (or a content provider (e.g., CP 1 402 or CP 2 403)) for performing a function for a domain related with the capsule. According to an embodiment, one capsule may include one or more actions 410 and one or more concepts 420 for performing a designated function.

The natural language platform 220 may generate a plan for performing a task corresponding to a received voice input, using a capsule stored in a capsule database. For example, the planner module 225 of the natural language platform may generate the plan using the capsule stored in the capsule database. For example, the planner module 225 may generate a plan 407 using actions 4011 and 4013 and concepts 4012 and 4014 of capsule A 410 and an action 4041 and a concept 4042 of capsule B 404.

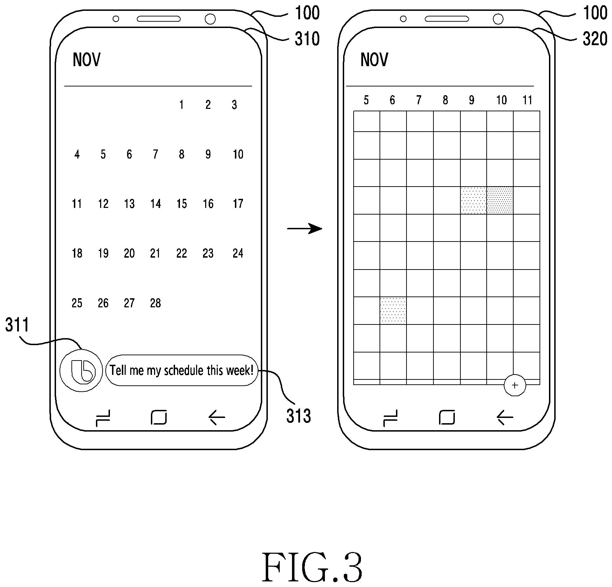

FIG. 3 is a diagram illustrating an example screen in which a voice input received through an intelligence app is processed by a user terminal according to various embodiments.

To process a user input through the intelligence server 200, the user terminal 100 may execute the intelligence app.

According to an embodiment, in screen 310, when recognizing a designated voice input (e.g., Wake up!) or receiving an input through a hardware key (e.g., a dedicated hardware key), the user terminal 100 may execute the intelligence app for processing the voice input. For example, the user terminal 100 may execute the intelligence app in a state in which a schedule app is executed. According to an embodiment, the user terminal 100 may display an object (e.g., an icon) 311 corresponding to the intelligence app on the display 140. According to an embodiment, the user terminal 100 may receive a voice input by a user utterance. For example, the user terminal 100 may receive a voice input of "Tell me my schedule this week!". According to an embodiment, the user terminal 100 may display a user interface (UI) 313 (e.g., an input window) of the intelligence app, in which text data of the received voice input is displayed, on the display.

According to an embodiment, in screen 320, the user terminal 100 may display a result corresponding to the received voice input on the display. For example, the user terminal 100 may receive a plan corresponding to the received user input, and display, on the display, "Your schedule this week" according to the plan.

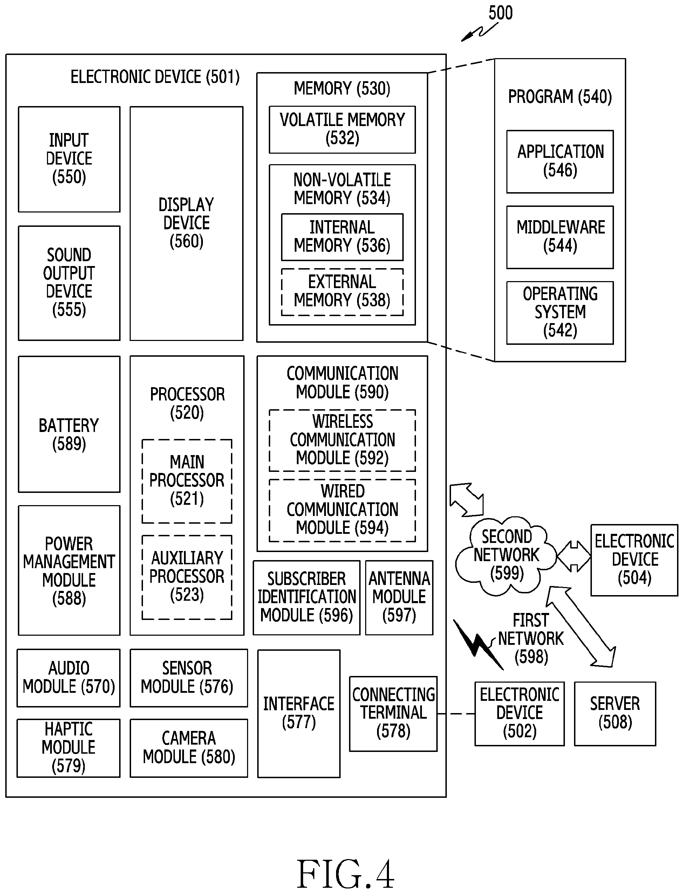

Fig. 4 is a block diagram illustrating an electronic device 501 in a network environment 500 according to various embodiments. Referring to Fig. 4, the electronic device 501 in the network environment 500 may communicate with an electronic device 502 via a first network 598 (e.g., a short-range wireless communication network), or an electronic device 504 or a server 508 via a second network 599 (e.g., a long-range wireless communication network). According to an embodiment, the electronic device 501 may communicate with the electronic device 504 via the server 508. According to an embodiment, the electronic device 501 may include a processor 520, memory 530, an input device 550, a sound output device 555, a display device 560, an audio module 570, a sensor module 576, an interface 577, a connecting terminal 578, a haptic module 579, a camera module 580, a power management module 588, a battery 589, a communication module 590, a subscriber identification module(SIM) 596, or an antenna module 597. In some embodiments, at least one (e.g., the display device 560 or the camera module 580) of the components may be omitted from the electronic device 501, or one or more other components may be added in the electronic device 501. In some embodiments, some of the components may be implemented as single integrated circuitry. For example, the sensor module 576 (e.g., a fingerprint sensor, an iris sensor, or an illuminance sensor) may be implemented as embedded in the display device 560 (e.g., a display).

The processor 520 may execute, for example, software (e.g., a program 540) to control at least one other component (e.g., a hardware or software component) of the electronic device 501 coupled with the processor 520, and may perform various data processing or computation. According to one embodiment, as at least part of the data processing or computation, the processor 520 may load a command or data received from another component (e.g., the sensor module 576 or the communication module 590) in volatile memory 532, process the command or the data stored in the volatile memory 532, and store resulting data in non-volatile memory 534. According to an embodiment, the processor 520 may include a main processor 521 (e.g., a central processing unit (CPU) or an application processor (AP)), and an auxiliary processor 523 (e.g., a graphics processing unit (GPU), a neural processing unit (NPU), an image signal processor (ISP), a sensor hub processor, or a communication processor (CP)) that is operable independently from, or in conjunction with, the main processor 521. Additionally or alternatively, the auxiliary processor 523 may be adapted to consume less power than the main processor 521, or to be specific to a specified function. The auxiliary processor 523 may be implemented as separate from, or as part of the main processor 521.

The auxiliary processor 523 may control at least some of functions or states related to at least one component (e.g., the display device 560, the sensor module 576, or the communication module 590) among the components of the electronic device 501, instead of the main processor 521 while the main processor 521 is in an inactive (e.g., sleep) state, or together with the main processor 521 while the main processor 521 is in an active state (e.g., executing an application). According to an embodiment, the auxiliary processor 523 (e.g., an image signal processor or a communication processor) may be implemented as part of another component (e.g., the camera module 580 or the communication module 590) functionally related to the auxiliary processor 523. According to an embodiment, the auxiliary processor 523 (e.g., the neural processing unit) may include a hardware structure specified for artificial intelligence model processing. An artificial intelligence model may be generated by machine learning. Such learning may be performed, e.g., by the electronic device 501 where the artificial intelligence is performed or via a separate server (e.g., the server 508). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 530 may store various data used by at least one component (e.g., the processor 520 or the sensor module 576) of the electronic device 501. The various data may include, for example, software (e.g., the program 540) and input data or output data for a command related thereto. The memory 530 may include the volatile memory 532 or the non-volatile memory 534.

The program 540may be stored in the memory 530 as software, and may include, for example, an operating system (OS) 542, middleware 544, or an application 546.

The input device 550 may receive a command or data to be used by other component (e.g., the processor 520) of the electronic device 501, from the outside (e.g., a user) of the electronic device 501. The input device 550 may include, for example, a microphone, a mouse, a keyboard, a key (e.g., a button), or a digital pen (e.g., a stylus pen).

The sound output device 555 may output sound signals to the outside of the electronic device 501. The sound output device 555 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 560 may visually provide information to the outside (e.g., a user) of the electronic device 501. The display device 560 may include, for example, a display, a hologram device, or a projector and control circuitry to control a corresponding one of the display, hologram device, and projector. According to an embodiment, the display device 560 may include touch circuitry adapted to detect a touch, or sensor circuitry (e.g., a pressure sensor) adapted to measure the intensity of force incurred by the touch.

The audio module 570 may convert a sound into an electrical signal and vice versa. According to an embodiment, the audio module 570 may obtain the sound via the input device 550, or output the sound via the sound output device 555 or a headphone of an external electronic device (e.g., an electronic device 502) directly (e.g., wiredly) or wirelessly coupled with the electronic device 501.

The sensor module 576 may detect an operational state (e.g., power or temperature) of the electronic device 501 or an environmental state (e.g., a state of a user) external to the electronic device 501, and then generate an electrical signal or data value corresponding to the detected state. According to an embodiment, the sensor module 576 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 577 may support one or more specified protocols to be used for the electronic device 501 to be coupled with the external electronic device (e.g., the electronic device 502) directly (e.g., wiredly) or wirelessly. According to an embodiment, the interface 577 may include, for example, a high definition multimedia interface (HDMI), a universal serial bus (USB) interface, a secure digital (SD) card interface, or an audio interface.

A connecting terminal 578 may include a connector via which the electronic device 501 may be physically connected with the external electronic device (e.g., the electronic device 502). According to an embodiment, the connecting terminal 578 may include, for example, a HDMI connector, a USB connector, a SD card connector, or an audio connector (e.g., a headphone connector).

The haptic module 579 may convert an electrical signal into a mechanical stimulus (e.g., a vibration or a movement) or electrical stimulus which may be recognized by a user via his tactile sensation or kinesthetic sensation. According to an embodiment, the haptic module 579 may include, for example, a motor, a piezoelectric element, or an electric stimulator.

The camera module 580 may capture a still image or moving images. According to an embodiment, the camera module 580 may include one or more lenses, image sensors, image signal processors, or flashes.

The power management module 588 may manage power supplied to the electronic device 501. According to an embodiment, the power management module 588 may be implemented as at least part of, for example, a power management integrated circuit (PMIC).

The battery 589 may supply power to at least one component of the electronic device 501. According to an embodiment, the battery 589 may include, for example, a primary cell which is not rechargeable, a secondary cell which is rechargeable, or a fuel cell.

The communication module 590 may support establishing a direct (e.g., wired) communication channel or a wireless communication channel between the electronic device 501 and the external electronic device (e.g., the electronic device 502, the electronic device 504, or the server 508) and performing communication via the established communication channel. The communication module 590 may include one or more communication processors that are operable independently from the processor 520 (e.g., the application processor (AP)) and supports a direct (e.g., wired) communication or a wireless communication. According to an embodiment, the communication module 590 may include a wireless communication module 592 (e.g., a cellular communication module, a short-range wireless communication module, or a global navigation satellite system (GNSS) communication module) or a wired communication module 594 (e.g., a local area network (LAN) communication module or a power line communication (PLC) module). A corresponding one of these communication modules may communicate with the external electronic device via the first network 598 (e.g., a short-range communication network, such as Bluetooth™, wireless-fidelity (Wi-Fi) direct, or infrared data association (IrDA)) or the second network 599 (e.g., a long-range communication network, such as a cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 592 may identify and authenticate the electronic device 501 in a communication network, such as the first network 598 or the second network 599, using subscriber information (e.g., international mobile subscriber identity (IMSI)) stored in the subscriber identification module 596.

The wireless communication module 592 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 592 may support a high-frequency band (e.g., the mmWave band) to achieve, e.g., a high data transmission rate. The wireless communication module 592 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 592 may support various requirements specified in the electronic device 501, an external electronic device (e.g., the electronic device 504), or a network system (e.g., the second network 599). According to an embodiment, the wireless communication module 592 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 597 may transmit or receive a signal or power to or from the outside (e.g., the external electronic device) of the electronic device 501. According to an embodiment, the antenna module 597 may include an antenna including a radiating element including a conductive material or a conductive pattern formed in or on a substrate (e.g., PCB). According to an embodiment, the antenna module 597 may include a plurality of antennas (e.g., array antennas). In such a case, at least one antenna appropriate for a communication scheme used in the communication network, such as the first network 598 or the second network 599, may be selected, for example, by the communication module 590 (e.g., the wireless communication module 592) from the plurality of antennas. The signal or the power may then be transmitted or received between the communication module 590 and the external electronic device via the selected at least one antenna. According to an embodiment, another component (e.g., a radio frequency integrated circuit (RFIC)) other than the radiating element may be additionally formed as part of the antenna module 597.

According to various embodiments, the antenna module 597 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 501 and the external electronic device 504 via the server 508 coupled with the second network 599. Each of the electronic devices 502 and 504 may be a device of a same type as, or a different type, from the electronic device 501. According to an embodiment, all or some of operations to be executed at the electronic device 501 may be executed at one or more of the external electronic devices 502, 504, or 508. For example, if the electronic device 501 should perform a function or a service automatically, or in response to a request from a user or another device, the electronic device 501, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 501. The electronic device 501 may provide the outcome, with or without further processing of the outcome, as at least part of a reply to the request. To that end, a cloud computing, distributed computing, mobile edge computing (MEC), or client-server computing technology may be used, for example. The electronic device 501 may provide ultra low-latency services using, e.g., distributed computing or mobile edge computing. In another embodiment, the external electronic device 504 may include an internet-of-things (IoT) device. The server 508 may be an intelligent server using machine learning and/or a neural network. According to an embodiment, the external electronic device 504 or the server 508 may be included in the second network 599. The electronic device 501 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it includes that the element may be coupled with the other element directly (e.g., wiredly), wirelessly, or via a third element.

As used herein, the term "module" may include a unit implemented in hardware, software, or firmware, or any combination thereof and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 540) including one or more instructions that are stored in a storage medium (e.g., internal memory 536 or external memory 538) that is readable by a machine (e.g., the electronic device 501). For example, a processor(e.g., the processor 520) of the machine (e.g., the electronic device 501) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

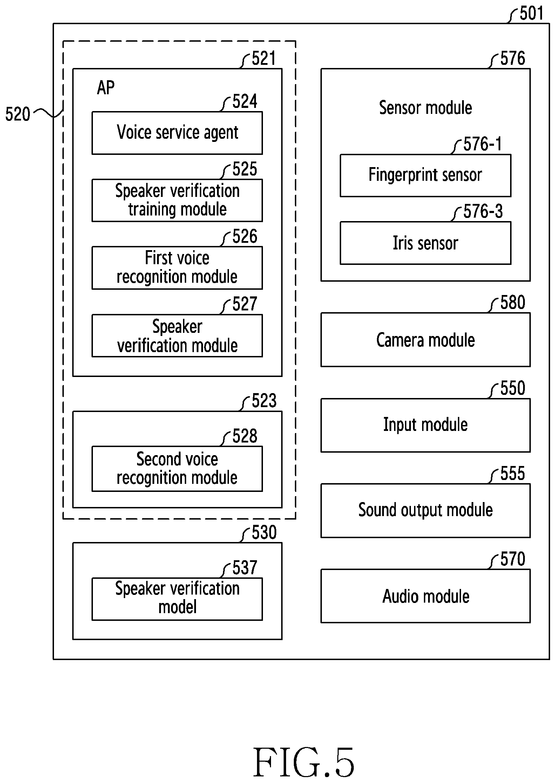

FIG. 5 is a block diagram illustrating an example configuration of an electronic device according to various embodiments. Referring to FIG. 5, an electronic device 501 may include at least one processor (e.g., including various processing circuitry, e.g., an application processor 521 and an auxiliary processor 523) 520, a memory 530, an input module (e.g., including input circuitry) 550, a sound output module (e.g., including sound output circuitry) 555, an audio module (e.g., including audio circuitry) 570, a sensor module (e.g., including at least one sensor) 576, and a camera module (e.g., including a camera) 580. Components of the electronic device 501 illustrated in FIG. 5 correspond to a non-limiting example, and some of the illustrated components may be changed or deleted, or some components may be added. According to various embodiments, the electronic device 501 may include the electronic device 501 of FIG. 4. According to various embodiments, the electronic device 501 may include the user terminal 100 of FIG. 1. For example, the electronic device 501 may include some or all of the components of the electronic device 501 of FIG. 4 in addition to the illustrated components. For example, the electronic device 501 may include some or all of the components of the user terminal 100 of FIG. 1. According to various embodiments, the electronic device 501 may include some of the components of the intelligence server 200 of FIG. 1. According to various embodiments, the electronic device 501 may communicate with the intelligence server 200 of FIG. 1 and independently or jointly perform operations according to various embodiments. Hereinafter, the electronic device 501 of FIG. 5 will be described in detail with reference to FIGS. 1 to 5.

The application processor 521 (hereinafter, interchangeably referred to as a processor 521) may include various processing circuitry and execute, for example, an application according to data stored in the memory 530 and may perform various data processing or computation. According to an embodiment, as at least part of the data processing or computation, the processor 521 may process a command or data received from another component (e.g., the sensor module 576 or the input module 550).

According to an embodiment, the processor 521 may include a hardware structure specified for processing a speaker verification model and/or a voice recognition model for performing a voice service. For example, the processor 521 may include a voice service agent 524, a speaker verification training module 525, a first voice recognition module 526, and a speaker verification module 527. The voice recognition model and/or the speaker verification model may be generated through machine learning. Such learning may be performed, for example, by the electronic device 501 or via a separate server (e.g., the server 508 of FIG. 4).

According to an embodiment, the voice service agent 524, the speaker verification training module 525, the first voice recognition module 526, and the speaker verification module 527 may be implemented as software (e.g., the program 540) including one or more instructions stored in a storage medium (e.g., internal memory 536 or external memory 538) that is readable by a machine (e.g., the electronic device 501). For example, a processor (e.g., the processor 520) of the machine (e.g., the electronic device 501) may allow performing at least one function of the modules by invoking at least one of the one or more instructions stored in the storage medium and operating the components of the machine according to the at least one invoked instruction.

According to an embodiment, the processor 521 may include at least a part of a hardware structure for implementing the voice service agent 524, the speaker verification training module 525, the first voice recognition module 526, and the speaker verification module 527, and allow performing at least one function of the modules by invoking at least one of the one or more stored instructions from the storage medium and operating the hardware structure according to the at least one invoked instruction.

The processor 521 may provide a voice-based service through the voice service agent 524. According to an embodiment, the voice service agent 524 may provide a user with a response corresponding to a voice signal according to a user utterance received through the microphone of the input module 550, through the sound output module 555. According to an embodiment, at least a part of a series of operations of processing the voice signal and generating the response may be performed by the voice recognition module 526 or the voice service agent 524 of the electronic device 501. According to an embodiment, at least a part of the series of operations of processing the voice signal and generating the response may be performed by the server 508. For example, the server 508 may include the intelligence server 200 of FIG. 1 or may be implemented as a server separate from the intelligence server 200. For example, a series of operations of processing the voice signal and generating the response may include an operation (action or action sequence) of converting a voice into text (automatic speech recognition (ASR)), an operation of extracting an intent corresponding to text and related parameters and slots thereof, and an operation performed according to a plan corresponding to the intent.

The processor 521 may process a voice signal through the first voice recognition module 526 and convert the voice signal into text using a voice recognition algorithm. According to an embodiment, the first voice recognition module 526 may be implemented to recognize a limited number of words. According to an embodiment, a word which can be recognized by the first voice recognition module 526 may be pre-designated and stored in, for example, the memory 530. According to an embodiment, the first voice recognition module 526 may recognize more words through the server 508. According to an embodiment, the first voice recognition module 526 may store data required for a voice recognition operation in memory 530. According to an embodiment, the first voice recognition module 526 may perform a hidden Markov model (HMM)-based voice recognition algorithm. For example, the first voice recognition module 526 may perform the voice recognition algorithm using information such as state initial probability, state transition probability, and/or observation probability required for the Markov model as a voice recognition model. According to an embodiment, the first voice recognition module 526 may use a neural network-based algorithm. For example, the first voice recognition module 526 may perform the voice recognition algorithm using information such as a layer, a node type and structure, a weight for each node, network connection information, an activation function required for the neural model as a voice recognition model. According to an embodiment, the first voice recognition module 526 may perform a recognition algorithm according to a combination of two types of voice recognition models. For example, the first voice recognition module 526 may use a hybrid model of the HMM model and the neural model.

The processor 521 may perform speaker verification of an input voice through the speaker verification module 527. The speaker verification according to an embodiment may be speaker-dependent voice recognition. For example, the speaker verification may be performed using information on a voice feature of a registered user. For example, the speaker verification may be performed using the speaker verification model 537 stored in the memory 530. For example, the speaker verification may be performed by comparing the information on the voice feature of the registered user, the information being trained by the speaker verification model 537, with information on a feature of the input voice. For example, the speaker verification may be performed by a speaker verification score obtained by comparing the information on the voice feature of the registered user, the information being trained by the speaker verification model 537, with the information on the feature of the input voice. For example, the information on the feature of the input voice may include various types of property information such as the frequency feature of a voice signal of the input voice, the duration or the volume of the voice, the number of phonemes, or the length of the phoneme.

According to an embodiment, the speaker verification module 527 may perform speaker verification with reference to additional information of the input voice. For example, when user verification such as biometric recognition is performed by the electronic device 501 within a configured time interval before or after the voice input, the input voice may be determined as a voice of the registered user.

According to an embodiment, the speaker verification training module 525 may generate the speaker verification model 537 and store the same in the memory 530 using feature information of the user voice input in the process in which a user registers the user's voice. For example, the speaker verification model 537 may be generated by learning a Gaussian mixture model - universal background model (GMM-UBM) according to a maximum likelihood linear regression (MLLR) scheme or a maximum a posteriori (MAP) scheme. For example, the speaker verification model 537 may be generated using a feature vector (I-vector) corresponding to the speaker. For example, the speaker verification model 537 may be generated using a statistics model such as a neural network model. For example, the speaker verification model 537 may be generated using a feature vector column of a voice signal, generated using a recognition algorithm such as dynamic time warping (DTW) and vector quantization (VQ). The speaker verification model 537 may include various recognition models in addition to the above-mentioned models, and the models may be generated using information which can represent a voice to be recognized. For example, the speaker verification model 537 may include property information of a voice. For example, the property information may include at least one of the frequency feature of a voice signal, the duration or the volume of the voice, the number of phonemes, or the length of the phoneme.

According to an embodiment, the speaker verification module 527 may analyze the input voice according to an utterance after user registration using the speaker verification model 537. Accordingly, when the input voice is determined as a voice of a registered user, the speaker verification training module 525 may train and update the speaker verification model 537 using the input voice. For example, the speaker verification training module 525 may include an additionally input voice to the existing voice information and train the speaker verification model 537 using one or more of the above-described various schemes.

According to an embodiment, when user verification such as biometric recognition is performed by the electronic device 501 within a configured time interval before or after the voice input, with respect to feature information of the corresponding input voice, the processor 521 may train and update the speaker verification training model 525 by comparing feature information of a voice of a registered user with the feature information of the input voice and applying a weight according to similarity upon the result of the comparison.

The auxiliary processor 523 may be a processor having a relatively smaller power consumption amount than that of the application processor 521. The auxiliary processor 523 may be configured to allow the electronic device 501 to perform a designated function while being continuously supplied with power even in an idle state. For example, the auxiliary processor 523 may control at least some of functions or states related to at least one component (e.g., the audio model 570, the sensor module 576, or the camera module 580) among the components of the electronic device 501, instead of the application processor 521 while the application processor 521 is in an inactive (e.g., sleep) state.

According to an embodiment, the auxiliary processor 523 may recognize the input voice through a second voice recognition module 528. The second voice recognition module 528 included in the auxiliary processor 523 may perform voice recognition using a simple voice recognition algorithm which can be operated with low power. For example, the second voice recognition module 528 implemented by the auxiliary processor 523 that is a low power processor may be implemented to recognize a designated word (e.g., a wakeup word). In this case, the second voice recognition module 528 may be configured to use a voice recognition model for the designated word. For example, when a voice signal is input through the audio module 570 while the application processor 521 is in a sleep state and a pre-configured wakeup word (e.g., "Hi Bixby") is recognized through the second voice recognition module 528 in response to the input voice signal, the auxiliary processor 523 may transfer a wakeup signal which activates the processor 521. For example, the auxiliary processor 523 may change the state of the processor 521 from the inactive state to the active state using the wakeup signal. For example, the processor 521 may activate the voice service agent 524 to provide a voice service function of the electronic device 501. For example, the processor 521 may identify whether the wakeup word corresponds to the registered user's voice through the speaker verification module 527 before providing the voice service function of the electronic device 501, and when the wakeup word does not correspond to the registered user's voice, the processor 521 may not activate the voice service agent 524 or may suspend providing the voice service function.

According to an embodiment, in a case in which the processor 521 is in an active state, when a user utterance occurs and the user utterance is received through a microphone (e.g., the microphone 120 of FIG. 1 or the input module 550 of FIG. 4 or FIG. 5) and a voice signal is processed through the audio module 570 and is input, a pre-configured wakeup word may be recognized through the first voice recognition module 526 in response to the input voice signal. When the pre-configured wakeup word is recognized through the first voice recognition module 526, the speaker recognition module 527 may identify whether the recognized wakeup word corresponds to the registered user's voice. For example, when the recognized wakeup word does not correspond to the registered user's voice, the processor 521 may not activate the voice service agent 524 or may suspend providing the voice service function. For example, when the recognized voice corresponds to the registered user's voice, the processor 521 may activate the voice service agent 524 to provide the voice service function. For example, when the recognized wakeup word corresponds to the registered user's voice, the processor 521 may train and update the speaker verification model 537 using the corresponding wakeup voice through the speaker verification training module 525.

The configuration of the application processor 521 and the auxiliary processor 523 of FIG. 5 is illustrative, and the application processor 521 and the auxiliary processor 523 may, for example, be implemented as a single processor 520.

The memory 530 may store various types of data used by at least one component (e.g., the processor 521, the auxiliary processor 523, or the sensor module 576). Data may include, for example, software (e.g., the first app 155_1 and the second app 155_2 of FIG. 1 and the program 540 of FIG. 4) and input data or output data of a command related thereto. The memory 530 may include the speaker verification model 537 for speaker verification according to various embodiments as described above.

The input module 550 may include various input circuitry and receive a command or data to be used for a component (e.g., the processor 521 or 523) of the electronic device 501 from the outside (e.g., a user) of the electronic device 501. The input module 550 may include, for example, a microphone or a touch input device (e.g., a touch panel or a touch screen).

The sound output module 555 may include various sound output circuitry and output a sound signal to the outside of the electronic device 501. The sound output module 555 may include, for example, a speaker or a receiver.

The audio module 570 may include various audio circuitry and convert a sound into an electrical signal and vice versa. According to an embodiment, the audio module 570 may obtain the sound via the input module 550, or output the sound via the sound output module 555 or an external electronic device (e.g., the electronic device 502 of FIG. 4) (e.g., a speaker or a headphone) directly or wirelessly coupled with the electronic device 501.

The sensor module 576 may include at least one sensor and detect an environmental state (e.g., a state of a user) external to the electronic device 501, and then generate an electrical signal or a data value corresponding to the detected state. According to an embodiment, the sensor module 576 may include, for example, a biometric sensor such as a fingerprint sensor 576-1 or an iris sensor 576-3. The fingerprint sensor 576-1 or the iris sensor 576-3 is an example of the biometric sensor, and the sensor module 576 may additionally include, for example, various biometric sensors such as a contactless vein sensor.

According to an embodiment, a part of at least one sensor, for example, the fingerprint sensor 576-1 may be included in the input module 550 of the electronic device 501. According to an embodiment, the input module 550 may include a home button, a side button (e.g., a physical button or key or an input unit disposed in relation to execution of an intelligent agent function) of the electronic device 501, and/or at least a predetermined area (e.g., an icon area) of a display (e.g., the display 140 of FIG. 1 or the display module 560 of FIG. 4), and the fingerprint sensor may be included in the home button, the side button, or at least the predetermined area of the display 140. A fingerprint recognition function may be performed when a user presses the home button, presses the side button assigned in relation to the execution of an intelligent agent function or a voice command function, or touches the predetermined area of the display 140.

According to an embodiment, the iris sensor 576-3 may include a light emitting unit for outputting light having a designated wavelength band and a light receiving unit for receiving light having a designated wavelength band and recognizing an iris.

According to an embodiment, when user biometric verification is performed through a biometric sensor in the electronic device 501 within a configured time interval before or after the voice input through the audio module 570, the processor 521 may determine that the input voice corresponds to a registered user's voice. For example, when the user biometric verification is performed through a biometric sensor such as the fingerprint sensor 576-1 or the iris sensor 576-3, the processor 521 may determine that the input voice corresponds to a user's voice.

The camera module 580 may include at least one camera and capture a still image or moving images. According to an embodiment, the camera module 580 may be activated in a specific situation (e.g., a situation in which a wakeup word is received through the input module 550) and operate as a biometric sensor by capturing an image (e.g., an image of a biometric feature or the face of a user).

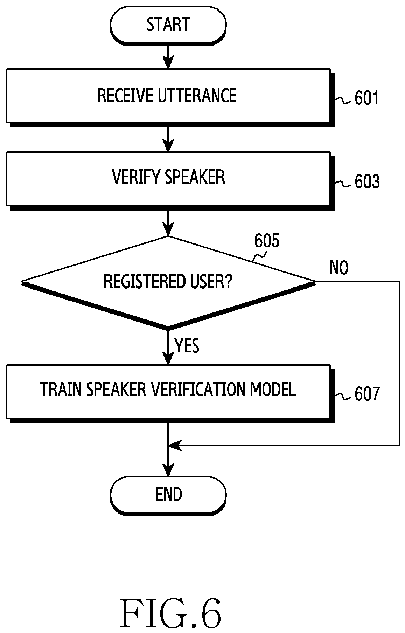

FIG. 6 is a flowchart illustrating an example operation of an electronic device according to various embodiments.

According to an embodiment, at least one of operations 601 to 607 may be omitted, the sequence of some operations may change, or other operations may be added.

Referring to FIG. 6, in operation 601, one or more processors (e.g., the processor 160 of FIG. 1 or the processor 520, 521, or 523 of FIGS. 4 and 5) of an electronic device (e.g., the user terminal 100 of FIG. 1 or the electronic device 501 of FIGS. 4 and 5) may recognize a voice input (e.g., utterance) to the electronic device. For example, the processor may process a voice signal input to the electronic device and convert the voice signal to text using a voice recognition algorithm. For example, the processor may execute an application for a voice recognition service when the voice signal input to the electronic device corresponds to a designated wakeup word.

According to an embodiment, in operation 603, the processor may verify a speaker of the input voice signal. For example, with respect to the voice signal, the processor may verify a speaker using a speaker verification model (e.g., the speaker verification model 537 of FIG. 5) stored in a memory (e.g., the memory 530 of FIG. 5). For example, the processor may perform speaker verification by comparing voice feature information of a registered user with feature information of the input voice.

For example, with respect to the voice signal, the processor may obtain a speaker verification score using the speaker verification model. For example, the speaker verification score may be obtained upon the speaker feature similarity according to the speaker verification model.

For example, the speaker feature similarity may correspond to a scale of the degree of similarity between a registered user's speaker feature according to the existing speaker verification model and a speaker feature of a newly input voice signal, and may be obtained according to a learning model.

For example, the speaker feature similarity may be obtained using a likelihood ratio test (LRT) in the GMM-UBM-type model, and may be obtained using the Euclidian distance or the cosine distance in a template matching-type model. For example, the speaker feature similarity may be obtained using the distance between speaker feature vectors in a neural network or HMM model. For example, the speaker feature similarity may be obtained using speaker feature conversion factor F according to each learning model using multiple learning models. For example, speaker feature conversion factor F according to each learning model may be a linear function or a non-linear function.

For example, when additional learning or updating is pre-configured for the speaker verification model for the registered user, the processor may allow a speaker verification operation to be performed for a recognized voice signal upon the recognition of a voice signal input to the electronic device.

For example, when the voice signal input to the electronic device is recognized as a designated wakeup word, the processor may allow the speaker verification operation to be performed for the recognized wakeup word.

According to an embodiment, in operation 605, the processor may determine whether the speaker of the input voice signal is a registered user.

For example, the processor may determine that the speaker of the input voice signal corresponds to a registered user according to the result of the speaker verification in operation 603. For example, the processor may determine that the speaker of the input voice signal corresponds to the registered user when the speaker verification score of the input voice signal is greater than a configured threshold value according to the result of the speaker verification in operation 603.

According to an embodiment, according to whether other verification events have occurred, the processor may determine that the speaker of the input voice signal correspond to the registered user. For example, when other types of user verification are performed for the registered user within a designated time interval before or after (e.g., 10 seconds of a time interval before or after) an input time point of the input voice signal, the processor may determine that the speaker of the input voice signal corresponds to the registered user. For example, other types of user verification may include a type of verification according to biometric recognition including fingerprint recognition, iris recognition, vein recognition, or face recognition of a user.

According to an embodiment, the processor may determine whether the speaker corresponds to the registered user according to the result of the speaker verification for the input voice signal and whether other verification events have occurred.

According to an embodiment, the processor may terminate an application for the voice recognition service if the voice signal of the speaker does not correspond to the voice of the registered user (If "No" in operation 605).

According to an embodiment, when the speaker is determined as the registered user, the processor may train and update the speaker verification model using the input voice signal in operation 607. For example, the speaker verification model training may be performed for the existing speaker verification model according to the speaker feature similarity of the newly input voice. For example, the speaker verification model training may be performed by applying a weight based on speaker feature similarity of the newly input voice to the existing speaker verification model. For example, the weight based on the similarity may be obtained by applying a function which linearly or non-linearly increases as the similarity increases.

According to an embodiment, the weight based on the speaker feature similarity may have a value obtained by applying function g to the likelihood ratio test (LRT) in the GMM-UBM-type model, and may have a value obtained by applying function g to the Euclidian distance or the cosine distance in the template matching-type model. For example, the weight based on the speaker feature similarity may have a value obtained by applying function g to the distance between the speaker feature vectors in the neural network or HMM model. For example, the weight based on the speaker feature similarity may have a value obtained by applying function g to speaker feature conversion function F according to each learning model using multiple learning models.

According to an embodiment, representative speaker feature score S 1 may be obtained according to Equation 1 below by applying respective weights of speaker features of learning voices.

[Equation 1]

$$S1 = F(w_1 . u_1, \ldots, w_i . u_i, \ldots, w_N . u_N)$$

Here, F is a function of converting speaker features of learning voices, speaker features being multiplied by the weights, into the representative speaker feature, u; may correspond to an i-th learning voice speaker feature, and wi may correspond to a weight applied according to the i-th learning voice speaker feature.

According to an embodiment, the weight applied to each of the speaker features of the learning voices may be obtained according to Equation 2 below.

[Equation 2]

$$w_i = g(s_i)$$

Here, g is a function of a correlation between the similarity and the weight, and si may correspond to the similarity between the registered speaker feature and the i-th learning voice speaker feature. A linear function or a non-linear function may be applied for function g.

According to an embodiment, after the similarity score for each learning voice speaker feature is obtained, representative similarity score S2 for all learning voice speaker features may be obtained according to Equation 3 below.

[Equation 3]

$$S2 = F(w_1 . S(u_1, u_T), \ldots, w_i . S(u_i, u_T), \ldots, w_N . S(u_N, u_T))$$

Here, F is a function of converting the similarity between speaker features of learning voices, speaker features being multiplied by the weights, into the representative speaker feature similarity, $u_i$ may correspond to the i-th learning voice speaker feature, $u_T$ may correspond to a current voice speaker feature to be learned, $S(u_i, u_T)$ may correspond to the similarity between the currently learning voice speaker feature and the i-th learning voice speaker feature obtained by similarity calculation function S, and wi may correspond to a weight applied according to the i-th learning voice speaker feature.

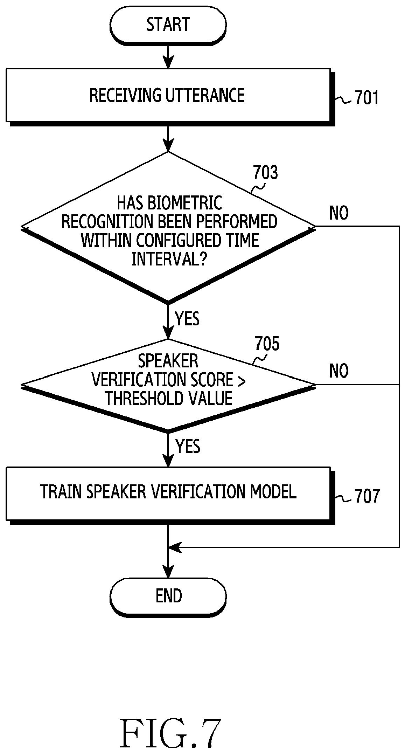

FIG. 7 is a flowchart illustrating an example operation of an electronic device according to various embodiments.

Referring to FIG. 7, in operation 701, one or more processors (e.g., the processor 160 of FIG. 1 or the processor 520, 521, or 523 of FIGS. 4 and 5) of an electronic device (e.g., the user terminal 100 of FIG. 1 or the electronic device 501 of FIGS. 4 and 5) may recognize a voice input (e.g., utterance) to the electronic device. According to an embodiment, the voice input to the electronic device may be limited to a voice (e.g., a wakeup word) including a designated content that is pre-configured. According to an embodiment, the voice input of the electronic device may not be limited to a voice including a designated content that is pre-configured.

According to an embodiment, in operation 703, the processor may determine whether other types of user verification have been performed within a designated time interval before or after (e.g., 10 seconds of a time interval before or after) an input time point of the input voice signal. For example, other types of user verification may include a type of verification according to biometric recognition including fingerprint recognition, iris recognition, or face recognition of a user.

According to an embodiment, the processor may terminate a speaker verification model training operation if it is determined that no other types of user verification are performed within the designated time interval before or after the input time point of the input voice signal in operation 703.

According to an embodiment, it is determined that other types of user verification have been performed within the designated time interval before or after the input time point of the input voice signal, the processor may obtain a speaker verification score of the input voice signal and determine whether the obtained speaker verification score is greater than a designated threshold value in operation 705. For example, different designated threshold values of the speaker verification score may be configured according to a learning model. For example, the speaker verification score may be obtained according to the above-described equations. For example, when the speaker verification score is configured to be a scale of 0 to 10, the threshold value may be configured as a higher scale, for example, 6 or 7, according to learning data and/or the feature of the learning model.

According to an embodiment, if the speaker verification score is greater than the threshold value, the processor may train and update the speaker verification model using the input voice signal in operation 707. For example, the processor may extract a speaker feature of the input voice signal and update the speaker verification model by applying a weight obtained according to the above-described equations to the extracted speaker feature.

According to an embodiment, if the speaker verification score is not greater than the threshold value in operation 705, the processor may terminate the speaker verification model training operation.

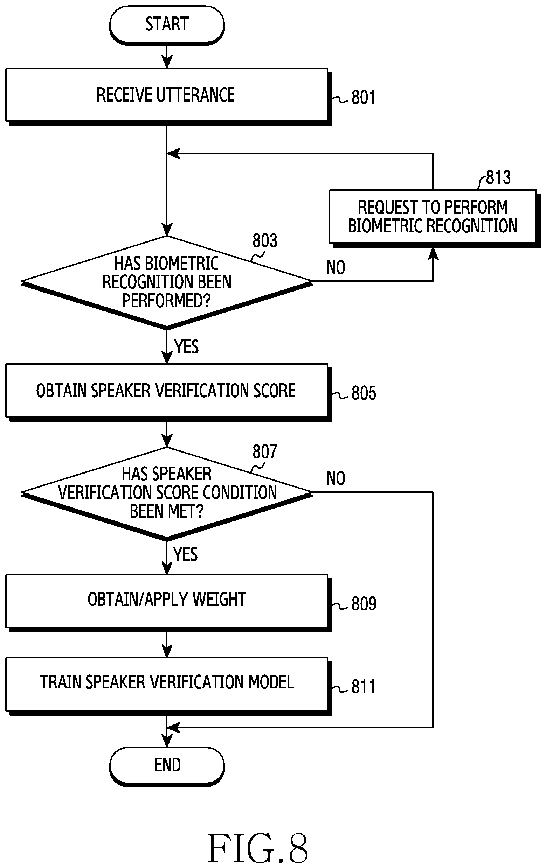

FIG. 8 is a flowchart illustrating an example operation of an electronic device according to various embodiments.

Referring to FIG. 8, in operation 801, one or more processors (e.g., the processor 160 of FIG. 1 or the processor 520, 521, or 523 of FIGS. 4 and 5) of an electronic device (e.g., the user terminal 100 of FIG. 1 or the electronic device 501 of FIGS. 4 and 5) may recognize a voice input (e.g., utterance) to the electronic device.

According to an embodiment, in operation 803, the processor may determine whether other types of user verification have been performed within a designated time interval before or after (e.g., 10 seconds of a time interval before or after) an input time point of the input voice signal. For example, other types of user verification may include a type of verification according to biometric recognition including fingerprint recognition, iris recognition, or face recognition of a user.

According to an embodiment, if other types of user verification have been performed within the designated time interval before or after the input time point of the input voice signal, the processor may obtain a speaker verification score of the input voice signal in operation 805 and may determine whether the obtained speaker verification score satisfies a designated condition in operation 807. For example, the designated condition for the speaker verification score may be a condition in which the speaker verification score is greater than a minimum threshold value. If the speaker verification score does not satisfy the designated condition in operation 807, the processor may terminate the operation.

According to an embodiment, if the speaker verification score satisfies the designated condition, the processor may obtain a weight to be applied to the input voice signal in operation 809. For example, the weight may be obtained using a speaker verification model. For example, with respect to the existing speaker verification model, the weight may be obtained as a function according to the speaker feature similarity of a newly input voice. For example, a function for obtaining the weight may be a linear function or a non-linear function for the similarity according to the speaker verification model.

According to an embodiment, in operation 811, the processor may train and update the speaker verification model by applying the obtained weight for the input voice signal. For example, the processor may extract a speaker feature of the input voice signal and may update the speaker verification model by applying the weight obtained according to the above-described equations to the extracted speaker feature.

According to an embodiment, if it is determined that no biometric verification is performed in operation 803, the processor may request a user to perform biometric verification in operation 813. For example, the processor may output guidance in a voice requesting to perform biometric verification, through a sound output module (e.g., the sound output module 555 of FIG. 5) of the electronic device, or output the guidance in text and/or an image through a screen of a display (e.g., the display module 560 of FIG. 4).

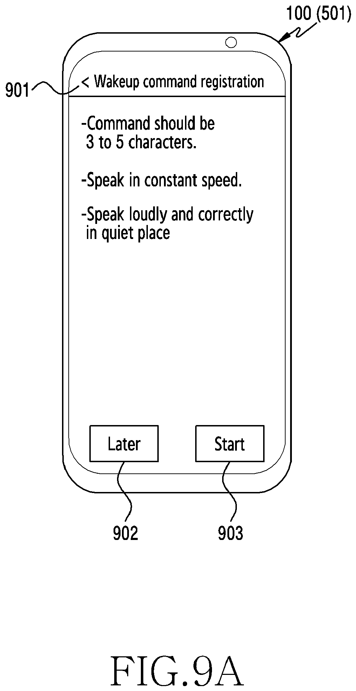

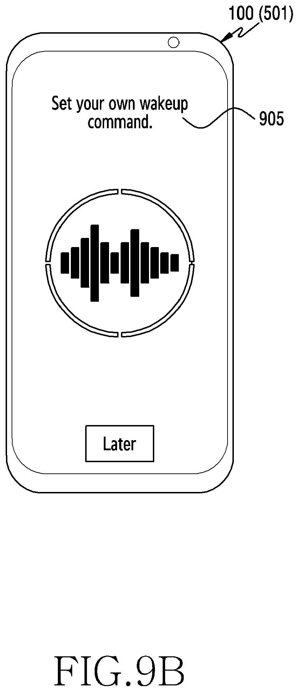

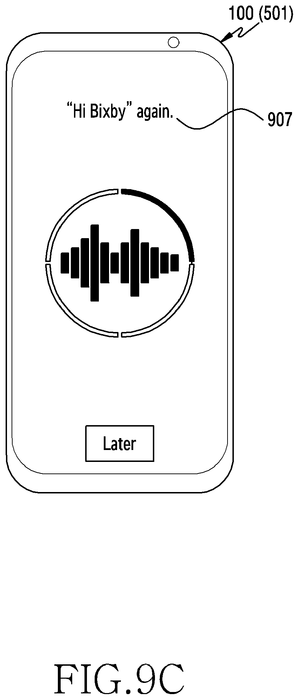

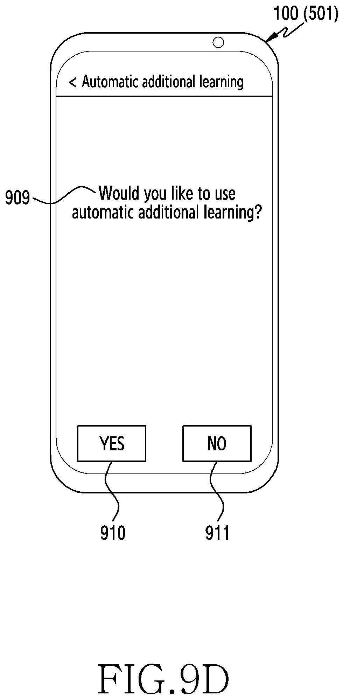

FIGS. 9A, 9B, 9C and 9D are diagrams illustrating example user registration operations invoking a voice recognition service according to various embodiments.

Referring to FIG. 9A, when a user selects a menu item of user wakeup command registration for invoking a voice recognition service, one or more processors (e.g., the processor 160 of FIG. 1 or the processor 520, 521, or 523 of FIGS. 4 and 5) of an electronic device (e.g., the user terminal 100 of FIG. 1 or 3 or the electronic device 501 of FIGS. 4 and 5) may display guidance 901 for wakeup command registration on a display (e.g., the display 140 of FIG. 1 or the display module 560 of FIG. 4). For example, the user may select a start icon 903 displayed on a display screen to start a user wakeup command registration operation. When the user selects a suspension icon 902, the displayed registration menu may be released and the screen may switch to the previous screen or the home screen.

Referring to FIG. 9B, when the user starts the wakeup command registration operation, the processor may display guidance 905 for a wakeup command input, in text and/or an image, through a display.

Referring to FIG. 9C, when the user generates an utterance for the wakeup command input and the utterance is received through a microphone (e.g., the microphone 120 of FIG. 1 or the input module 550 of FIG. 4) of the electronic device, the processor may output guidance 907 requesting the user to utter a received wakeup word (e.g., "Hi Bixby") a designated number of times.

Referring to FIG. 9D, when the user has completed the wakeup command registration operation, the processor may output guidance 909 inquiring of whether to perform additional wakeup command learning upon the selection of the user or automatically. For example, the user may select whether to perform additional wakeup command learning using a "Yes" or "No" button 910 or 911.

According to an embodiment, when the user selects a function of using additional wakeup command learning, the processor may perform a registered user voice verification learning operation for updating the speaker verification model as described with reference to FIGS. 1, 2, 3, 4, 5, 6, 7 and 8 above.

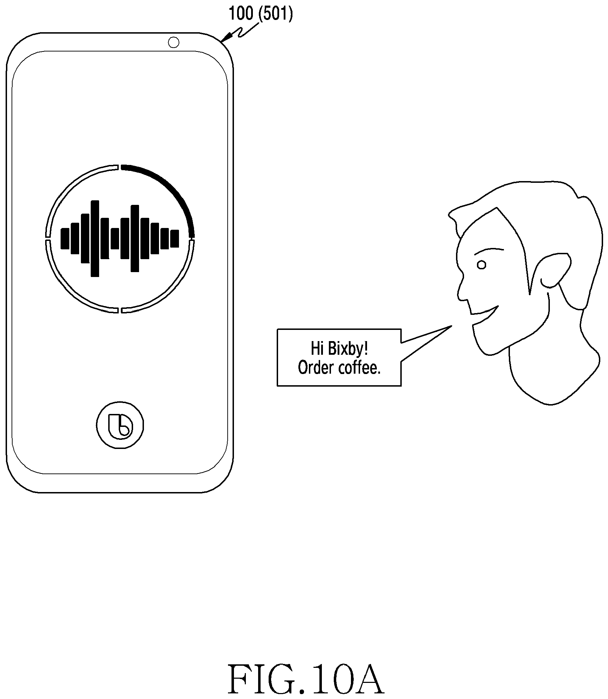

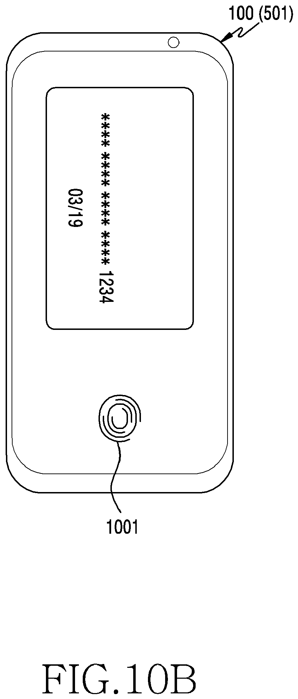

FIGS. 10A and 10B are diagrams illustrating examples of an operation of acquiring a voice of a registered voice of an electronic device according to various embodiments.

Referring to FIG. 10A, a user may utter a voice service wakeup command (e.g., "Hi Bixby") and input a voice of a designated instruction (e.g., "Order coffee") through a microphone (e.g., the microphone 120 of FIG. 1 or the input module 550 of FIG. 4) of an electronic device (e.g., the user terminal 100 of FIG. 1 or 3 or the electronic device 501 of FIGS. 4 and 5). One or more processors (e.g., the processor 160 of FIG. 1 or the processor 520, 521, or 523 of FIGS. 4 and 5) may perform voice recognition on the user's wakeup command, and may activate a voice service agent (e.g., the voice service agent 524 of FIG. 5) to analyze text of the instruction through voice recognition on the designated instruction of the user input. The processor may generate a plan for performing a task corresponding to the input designated instruction of the user (e.g., a plan for executing a payment app for ordering coffee).

Referring to FIG. 10B, for example, according to the text analysis of ordering coffee in the above-described example, the processor may identify a place (e.g., a café) where the user is currently located and execute an app for ordering coffee in the corresponding café, so as to allow the user to select one of coffee menu items. In addition, upon the selection of the user, the processor may perform a task according to a plan of executing a payment app and outputting guidance 1001 for inputting biometric information (e.g., outputting a fingerprint icon for inducing input of fingerprint information). In another example, the processor may execute a coffee ordering app and a payment app, wherein the processor may output voice guidance (e.g., "Would you like to order iced Americano?") asking whether to order a type of coffee that the user usually orders. Accordingly, the processor may identify the user's decision and then execute a plan for outputting guidance 1001 allowing the input of biometric information through the payment app.

According to an embodiment, when user biometric information is input through the payment app within a designated time interval after a wakeup word, "Hi Bixby", which is a voice service wakeup command of the user, is received, and the user is verified, the processor may perform a registered user voice verification learning operation for updating the speaker verification model using the received wakeup word as described with reference to FIGS. 1, 2, 3, 4, 5, 6, 7 and 8 above. For example, the designated time interval from a user utterance reception time point may be configured as a time taken until the user inputs biometric information through the payment app after the utterance time point.

According to an embodiment, when user biometric information is input through the payment app within the designated time interval after receiving the designated instruction (e.g., "Order coffee") that is the user's uttered voice, and the user is verified, the processor may perform the registered user voice verification learning operation for updating the speaker verification model using the received specific instruction as described with reference to FIGS. 1, 2, 3, 4, 5, 6, 7 and 8 above.

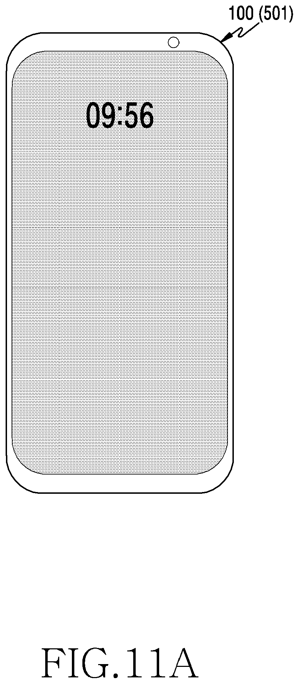

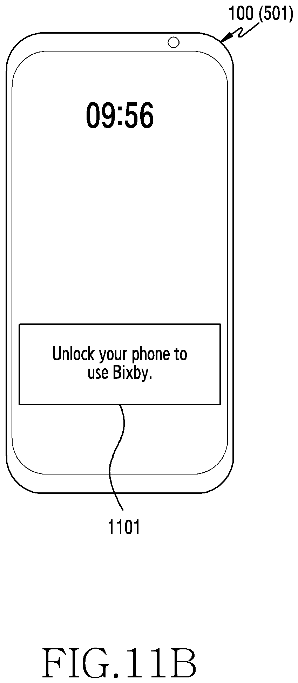

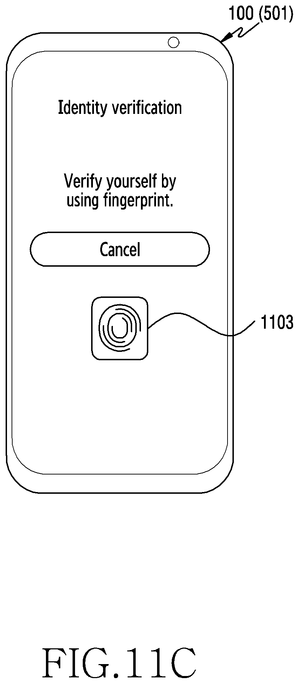

FIGS. 11A, 11B and 11C are diagrams illustrating examples of an operation of acquiring a voice of a registered user of an electronic device according to various embodiments. Hereinafter, examples of identifying whether a user utterance corresponds to a registered user's voice by requesting user verification including biometric verification when receiving the user utterance will be described with reference to FIGS. 11A, 11B and 11C.

Referring to FIG. 11A, the user may utter a voice service wakeup command (e.g., "Hi Bixby") through a microphone (e.g., the microphone 120 of FIG. 1 or the input module 550 of FIG. 4) of an electronic device (e.g., the user terminal 100 of FIG. 1 or 3 or the electronic device 501 of FIGS 4 and 5). For example, the electronic device may be in a standby state, wherein a main processor (e.g., the application processor 521 of FIG. 4 or 5) is in an inactive (e.g., sleep) state. For example, when the electronic device is in the standby state and the main processor thereof is in the inactive state, a screen of the electronic device may be displayed as a screen (e.g., a clock screen) of a low power display (always on display (AOD) which can be operated at low power even in a state in which main power is off and the screen is off as shown in FIG. 11A.

According to an embodiment, as the voice service wakeup command of the user is received while the application processor is in a sleep state, a low power processor (e.g., the auxiliary processor 523 of FIG. 4 or 5) may perform voice recognition on the received user utterance, and may transfer a wakeup signal so as to activate the application processor when the voice service wakeup command is recognized.

According to an embodiment, for example, before the wakeup signal is transferred to the application processor, the low power processor may induce user verification by outputting guidance 1101 requesting to release the inactive (e.g., a lock screen mode) state of the electronic device as shown in FIG. 11B and/or outputting an icon 1103 guiding verification through a fingerprint input of the user as shown in FIG. 11C. For example, the low power processor may obtain a speaker verification score of the received user utterance and induce user verification by outputting user verification guidance when the obtained score is equal to or less than a threshold value that is configured to have a relatively high value. For example, the low power processor may output the user verification guidance when the user does not perform user verification for releasing the lock within a designated time interval after the received user utterance.

According to an embodiment, when the user performs user verification in various ways such as biometric verification or using a password or a pattern for releasing the lock of the electronic device, the application processor may be activated according to the wakeup signal received from the low power processor.

According to an embodiment, as the voice service wakeup command of the user is received while the application processor is in the sleep state, the low power processor may perform voice recognition on the received user utterance and may transfer a wakeup signal so as to activate the application processor when the voice service wakeup command is recognized. Accordingly, for example, the application processor may induce user verification by outputting the icon 1103 guiding verification through a fingerprint input of the user as shown in FIG. 11C.

According to an embodiment, when user verification is successfully done upon the user verification request output in response to the user utterance, the application processor may perform a registered user voice verification learning operation for updating the speaker verification model using the received user utterance voice as described with reference to FIGS. 1, 2, 3, 4, 5, 6, 7 and 8 above.

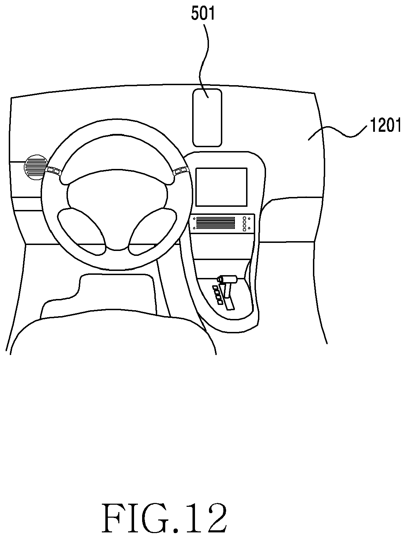

FIG. 12 is a diagram illustrating an example of an operation of acquiring a voice of a registered user of an electronic device according to various embodiments.

Referring to FIG. 12, an electronic device (e.g., the user terminal 100 of FIG. 1 or 3 or the electronic device 501 of FIG. 4 or 5) may be mounted in, for example, a vehicle 1201.

According to an embodiment, a user may utter a voice service wakeup command (e.g., "Hi Bixby") or a designated instruction through a microphone (e.g., the microphone 120 of FIG. 1 or the input module 550 of FIG. 4).

According to an embodiment, one or more processors (e.g., the processor 160 of FIG. 1 or the processor 520, 521, or 523 of FIGS. 4 and 5) may perform voice recognition on the received wakeup command or the designated instruction, and activate a voice service agent (e.g., the voice service agent 524 of FIG. 5), so as to analyze text including the instruction through voice recognition on the received wakeup command or the designated instruction.

According to an embodiment, when user face recognition is performed through the electronic device within a designated time interval before or after a time point at which the user utterance is received and the user is verified, the processor may determine that the corresponding utterance is made by a registered user. According to an embodiment, when it is determined that the user utterance is made by the registered user, the processor may perform a registered user voice verification learning operation for updating a speaker verification model using the received user utterance voice as described with reference to FIGS. 1 to 8 above.

An electronic device (e.g., the user terminal 100 of FIG. 1 or 3 or the electronic device 501 of FIGS. 4 and 5) described in FIGS. 9A to 12 may have a bar-type or a plate-type exterior, but is not limited thereto. For example, the illustrated electronic device may be a part of a rollable electronic device or a foldable electronic device. A "rollable electronic device" may refer to an electronic device, the at least a part of which can be wound or rolled, or can be received in a housing (not shown) since bending deformation can be applied to a display (e.g., the display 140 of FIG. 1) thereof. According to the user's need, the display of the rollable electronic device may be unfolded or the wider space of the display may be exposed, whereby the user can use an expanded screen display area. A "foldable electronic device" may refer, for example, to an electronic device which has two different areas of a display, wherein two areas can be folded to face each other or be oriented opposite to each other.

While the disclosure has been illustrated and described with reference to various example embodiments, it will be understood that the various example embodiments are intended to be illustrative, not limiting.

**Claims**

1.  An electronic device (100, 501) comprising:

    a microphone (120, 570);
    at least one sensor (576);
    a memory (150, 530) storing a speaker verification model for verifying a voice of a registered user; and
    at least one processor (160, 520) operatively connected to the microphone, the at least one sensor, and the memory, wherein the at least one processor is configured to:

    based on receiving an uttered voice through the microphone, identify whether user verification information is received through the at least one sensor within a designated time interval before or after a time point at which the uttered voice is received; and
    based on completion of the user verification according to the user verification information, update the speaker verification model using the uttered voice,
    wherein the at least one processor is configured to: compare voice feature information of the registered user with feature information of the uttered voice to obtain a designated weight according to similarity, and update the speaker verification model using the uttered voice to which the weight is applied.

2.  The electronic device of claim 1, wherein the at least one processor is configured to: perform voice recognition on the uttered voice to determine whether the uttered voice corresponds to a wakeup command for executing a voice service agent, and update the speaker verification model according to the uttered voice based on the uttered voice corresponding to the wakeup command.

3.  The electronic device of claim 1, wherein the at least one processor is configured to obtain a speaker verification score of the uttered voice using the speaker verification model.

4.  The electronic device of claim 3, wherein the at least one processor is configured to update the speaker verification model using the uttered voice based on the speaker verification score of the uttered voice being equal to or greater than a designated threshold value.

5.  The electronic device of claim 1, wherein the weight is obtained by applying a function which increases as the similarity increases.

6.  The electronic device of claim 1, wherein the at least one processor is configured to output guidance for an input of the user verification information based on no user verification information being received within the designated time interval.

7.  The electronic device of claim 1, wherein the at least one sensor comprises at least one of: a fingerprint sensor, an iris recognition sensor, and an image sensor.

8.  The electronic device of claim 1, wherein the at least one processor comprises an application processor and a low power processor operating based on the application processor being in an inactive state,
    wherein based on the uttered voice being received when the application processor is in an inactive state, the low power processor is configured to: determine whether the uttered voice corresponds to a wakeup command for executing a voice service agent, and based on the uttered voice corresponding to the wakeup command, the low power processor causes the application processor to switch to an active state and identify reception of the user verification information.

9. The electronic device of claim 8, wherein the application processor is configured to execute a voice service agent to provide a voice service based on the uttered voice corresponding to the wakeup command.

10. A method of operating an electronic device comprising a memory storing a speaker verification model for verifying a voice of a registered voice, the method comprising:

receiving an uttered voice;
identifying whether user verification information is received through at least one sensor within a designated time interval before or after a time point at which the uttered voice is received; and
based on completion of the user verification according to the user verification information being identified, updating the speaker verification model using the uttered voice, and
further comprising:

comparing voice feature information of the registered user with feature information of the uttered voice to obtain a designated weight according to similarity,
wherein the updating of the speaker verification model comprises updating the speaker verification model using the uttered voice to which the weight is applied.

11. The method of claim 10, further comprising: performing voice recognition on the uttered voice to determine whether the uttered voice corresponds to a wakeup command for executing a voice service agent,
wherein the updating of the speaker verification model comprises updating the speaker verification model using the uttered voice based on the uttered voice corresponding to the wakeup command.

12. The method of claim 10, further comprising: obtaining a speaker verification score of the uttered voice using the speaker verification model.

13. The method of claim 12, wherein the updating of the speaker verification model comprises: updating the speaker verification model using the uttered voice based on the speaker verification score of the uttered voice being equal to or greater than a designated threshold value.

14. The method of claim 10, wherein the weight is obtained by applying a function which increases as the similarity increases.

**Patentansprüche**

1. Elektronische Vorrichtung (100, 501), die Folgendes umfasst:

ein Mikrofon (120, 570);
mindestens einen Sensor (576);
einen Speicher (150, 530), der ein Sprecher-Verifizierungsmodell zum Verifizieren einer Stimme eines registrierten Benutzers speichert; und
mindestens einen Prozessor (160, 520), der betriebsmäßig mit dem Mikrofon, dem mindestens einen Sensor und dem Speicher verbunden ist, wobei der mindestens eine Prozessor konfiguriert ist zum:

basierend auf dem Empfang einer geäußerten Stimme durch das Mikrofon, Identifizieren, ob Benutzerverifizierungsinformationen durch den mindestens einen Sensor innerhalb eines bestimmten Zeitintervalls vor oder nach einem Zeitpunkt, zu dem die geäußerte Stimme empfangen wird, empfangen werden; und
basierend auf dem Abschluss der Benutzerverifizierung gemäß den Benutzerverifizierungsinformationen, Aktualisieren des Sprecher-Verifizierungsmodells unter Verwendung der geäußerten Stimme,
wobei der mindestens eine Prozessor konfiguriert ist zum: Vergleichen der Sprachmerkmalinformationen des registrierten Benutzers mit Merkmalinformationen der geäußerten Stimme, um eine bestimmte Gewichtung entsprechend der Ähnlichkeit zu erhalten, und Aktualisieren des Sprecher-Verifizierungsmodells unter Verwendung der geäußerten Stimme, auf die die Gewichtung angewendet wird.

2. Elektronische Vorrichtung nach Anspruch 1, wobei der mindestens eine Prozessor konfiguriert ist zum: Durchführen einer Stimmerkennung an der geäußerten Stimme, um festzustellen, ob die geäußerte Stimme einem Weckbefehl zum Ausführen eines Sprachdienstagenten entspricht, und Aktualisieren des Sprecher-Verifizierungsmodells entsprechend der geäußerten Stimme basierend auf der geäußerten Stimme, die dem Weckbefehl entspricht.

3. Elektronische Vorrichtung nach Anspruch 1, wobei der mindestens eine Prozessor so konfiguriert ist, dass er unter Verwendung des Sprecher-Verifizierungsmodells eine Sprecher-Verifizierungsbewertung der geäußerten Stimme erhält.

4. Elektronische Vorrichtung nach Anspruch 3, wobei der mindestens eine Prozessor so konfiguriert ist, dass er das Sprecher-Verifizierungsmodell unter Verwendung der geäußerten Stimme basierend auf der Sprecher-Verifizierungsbewertung der geäußerten Stimme, die gleich oder größer als ein bestimmter Schwellenwert ist, aktualisiert.

5. Elektronische Vorrichtung nach Anspruch 1, wobei die Gewichtung durch Anwendung einer Funktion erhalten wird, die mit zunehmender Ähnlichkeit zunimmt.

6. Elektronische Vorrichtung nach Anspruch 1, wobei der mindestens eine Prozessor so konfiguriert ist, dass er eine Anleitung zur Eingabe der Benutzer-Verifizierungsinformationen ausgibt, basierend darauf, dass innerhalb des bestimmten Zeitintervalls keine Benutzer-Verifizierungsinformationen empfangen werden.

7. Elektronische Vorrichtung nach Anspruch 1, wobei der mindestens eine Sensor mindestens einen der folgenden Sensoren umfasst: einen Fingerabdrucksensor, einen Iriserkennungssensor und/oder einen Bildsensor.

8. Elektronische Vorrichtung nach Anspruch 1, wobei der mindestens eine Prozessor einen Anwendungsprozessor und einen Niedrigleistungsprozessor umfasst, der basierend auf einem inaktiven Zustand des Anwendungsprozessors arbeitet,
   wobei, basierend auf der geäußerten Stimme, die empfangen wird, wenn sich der Anwendungsprozessor in einem inaktiven Zustand befindet, der Niedrigleistungsprozessor konfiguriert ist zum: Bestimmen, ob die geäußerte Stimme einem Weckbefehl zum Ausführen eines Sprachdienstagenten entspricht, und basierend auf der geäußerten Stimme, die dem Weckbefehl entspricht, der Niedrigleistungsprozessor den Anwendungsprozessor veranlasst, in einen aktiven Zustand zu wechseln und den Empfang der Benutzerverifizierungsinformationen zu identifizieren

9. Elektronische Vorrichtung nach Anspruch 8, wobei der Anwendungsprozessor so konfiguriert ist, dass er einen Sprachdienstagenten ausführt, um einen Sprachdienst basierend auf der geäußerten Stimme, die dem Weckbefehl entspricht, bereitzustellen.

10. Verfahren zum Betreiben einer elektronischen Vorrichtung, die einen Speicher umfasst, der ein Sprecher-Verifizierungsmodell zum Verifizieren einer Stimme einer registrierten Stimme speichert, wobei das Verfahren Folgendes umfasst:

    Empfangen einer geäußerten Stimme;
    Identifizieren, ob Benutzer-Verifizierungsinformationen durch mindestens einen Sensor innerhalb eines bestimmten Zeitintervalls vor oder nach einem Zeitpunkt, zu dem die geäußerte Stimme empfangen wird, empfangen werden; und
    basierend auf dem Abschluss der Benutzer-Verifizierung gemäß den identifizierten Benutzer-Verifizierungsinformationen, Aktualisieren des Sprecher-Verifizierungsmodells unter Verwendung der geäußerten Stimme, und ferner umfassend:

    Vergleichen von Sprachmerkmalinformationen des registrierten Benutzers mit Merkmalinformationen der geäußerten Stimme, um eine bestimmte Gewichtung entsprechend der Ähnlichkeit zu erhalten,
    wobei das Aktualisieren des Sprecher-Verifizierungsmodells das Aktualisieren des Sprecher-Verifizierungsmodells unter Verwendung der geäußerten Stimme, auf die die Gewichtung angewendet wird, umfasst.

11. Verfahren nach Anspruch 10, ferner umfassend: Durchführen einer Stimmerkennung an der geäußerten Stimme, um zu bestimmen, ob die geäußerte Stimme einem Weckbefehl zum Ausführen eines Sprachdienstagenten entspricht,

wobei das Aktualisieren des Sprecher-Verifizierungsmodells das Aktualisieren des Sprecher-Verifizierungsmodells unter Verwendung der geäußerten Stimme basierend auf der geäußerten Stimme, die dem Weckbefehl entspricht, umfasst.

12. Verfahren nach Anspruch 10, das ferner Folgendes umfasst: Erhalten einer Sprecher-Verifizierungsbewertung der geäußerten Stimme unter Verwendung des Sprecher-Verifizierungsmodells.

13. Verfahren nach Anspruch 12, wobei das Aktualisieren des Sprecher-Verifizierungsmodells Folgendes umfasst: Aktualisieren des Sprecher-Verifizierungsmodells unter Verwendung der geäußerten Stimme basierend auf der Sprecher-Verifizierungsbewertung der geäußerten Stimme, die gleich oder größer als ein bestimmter Schwellenwert ist.

14. Verfahren nach Anspruch 10, wobei die Gewichtung durch Anwendung einer Funktion erhalten wird, die mit zunehmender Ähnlichkeit zunimmt.

## Revendications

1. Dispositif électronique (100, 501) comprenant :

un microphone (120, 570) ;
au moins un capteur (576) ;
une mémoire (150, 530) stockant un modèle de vérification de locuteur pour vérifier une voix d'un utilisateur enregistré ; et
au moins un processeur (160, 520) connecté de manière opérationnelle au microphone, à l'au moins un capteur et à la mémoire, où l'au moins un processeur est configuré pour :

sur la base de la réception d'une voix prononcée à travers le microphone, identifier si des informations de vérification d'utilisateur sont reçues à travers l'au moins un capteur dans un intervalle de temps désigné avant ou après un point temporel auquel la voix prononcée est reçue ; et
sur la base de l'achèvement de la vérification d'utilisateur selon les informations de vérification d'utilisateur, mettre à jour le modèle de vérification de locuteur en utilisant la voix prononcée,
où l'au moins un processeur est configuré pour : comparer des informations de caractéristiques vocales de l'utilisateur enregistré avec des informations de caractéristiques de la voix prononcée pour obtenir un poids désigné selon la similarité, et mettre à jour le modèle de vérification de locuteur en utilisant la voix prononcée à laquelle le poids est appliqué.

2. Dispositif électronique selon la revendication 1, où l'au moins un processeur est configuré pour : effectuer une reconnaissance vocale sur la voix prononcée pour déterminer si la voix prononcée correspond à une commande de réveil pour exécuter un agent de service vocal, et mettre à jour le modèle de vérification de locuteur selon la voix prononcée sur la base de la voix prononcée correspondant à la commande de réveil.

3. Dispositif électronique selon la revendication 1, où l'au moins un processeur est configuré pour obtenir un score de vérification de locuteur de la voix prononcée en utilisant le modèle de vérification de locuteur.

4. Dispositif électronique selon la revendication 3, où l'au moins un processeur est configuré pour mettre à jour le modèle de vérification de locuteur en utilisant la voix prononcée sur la base du score de vérification de locuteur de la voix prononcée étant égal ou supérieur à une valeur seuil désignée.

5. Dispositif électronique selon la revendication 1, où le poids est obtenu en appliquant une fonction qui augmente à mesure que la similarité augmente.

6. Dispositif électronique selon la revendication 1, où l'au moins un processeur est configuré pour émettre un guidage pour une entrée des informations de vérification d'utilisateur sur la base qu'aucune information de vérification d'utilisateur n'est reçue dans l'intervalle de temps désigné.

7. Dispositif électronique selon la revendication 1, où l'au moins un capteur comprend au moins l'un parmi : un capteur d'empreintes digitales, un capteur de reconnaissance d'iris et un capteur d'images.

**8.** Dispositif électronique selon la revendication 1, où l'au moins un processeur comprend un processeur d'application et un processeur de faible puissance fonctionnant sur la base du processeur d'application étant dans un état inactif, où, sur la base de la voix prononcée étant reçue lorsque le processeur d'application est dans un état inactif, le processeur de faible puissance est configuré pour : déterminer si la voix prononcée correspond à une commande de réveil pour exécuter un agent de service vocal, et sur la base de la voix prononcée correspondant à la commande de réveil, le processeur de faible puissance amène le processeur d'application à passer à un état actif et à identifier la réception des informations de vérification d'utilisateur.

**9.** Dispositif électronique selon la revendication 8, où le processeur d'application est configuré pour exécuter un agent de service vocal pour fournir un service vocal sur la base de la voix prononcée correspondant à la commande de réveil.

**10.** Procédé de fonctionnement d'un dispositif électronique comprenant une mémoire stockant un modèle de vérification de locuteur pour vérifier une voix d'une voix enregistrée, le procédé comprenant :

recevoir une voix prononcée ;
identifier si des informations de vérification d'utilisateur sont reçues à travers au moins un capteur dans un intervalle de temps désigné avant ou après un point temporel auquel la voix prononcée est reçue ; et
sur la base de l'achèvement de la vérification d'utilisateur selon les informations de vérification d'utilisateur étant identifiées, mettre à jour le modèle de vérification de locuteur en utilisant la voix prononcée, et comprenant en outre :

comparer des informations de caractéristiques vocales de l'utilisateur enregistré avec des informations de caractéristiques de la voix prononcée pour obtenir un poids désigné selon la similarité, où la mise à jour du modèle de vérification de locuteur comprend la mise à jour du modèle de vérification de locuteur en utilisant la voix prononcée à laquelle le poids est appliqué.

**11.** Procédé selon la revendication 10, comprenant en outre: effectuer une reconnaissance vocale sur la voix prononcée pour déterminer si la voix prononcée correspond à une commande de réveil pour exécuter un agent de service vocal, où la mise à jour du modèle de vérification de locuteur comprend la mise à jour du modèle de vérification de locuteur en utilisant la voix prononcée sur la base de la voix prononcée correspondant à la commande de réveil.

**12.** Procédé selon la revendication 10, comprenant en outre: obtenir un score de vérification de locuteur de la voix prononcée en utilisant le modèle de vérification de locuteur.

**13.** Procédé selon la revendication 12, où la mise à jour du modèle de vérification de locuteur comprend: la mise à jour du modèle de vérification de locuteur en utilisant la voix prononcée sur la base du score de vérification de locuteur de la voix prononcée étant égal ou supérieur à une valeur seuil désignée.

**14.** Procédé selon la revendication 10, où le poids est obtenu en appliquant une fonction qui augmente à mesure que la similarité augmente.

FIG.1

Concept action network <u>400</u>

FIG.2

**FIG.3**

500

**ELECTRONIC DEVICE (501)**

INPUT DEVICE (550)

SOUND OUTPUT DEVICE (555)

DISPLAY DEVICE (560)

**MEMORY (530)**

VOLATILE MEMORY (532)

NON-VOLATILE MEMORY (534)

INTERNAL MEMORY (536)

EXTERNAL MEMORY (538)

**PROGRAM (540)**

APPLICATION (546)

MIDDLEWARE (544)

OPERATING SYSTEM (542)

BATTERY (589)

POWER MANAGEMENT MODULE (588)

**PROCESSOR (520)**

MAIN PROCESSOR (521)

AUXILIARY PROCESSOR (523)

**COMMUNICATION MODULE (590)**

WIRELESS COMMUNICATION MODULE (592)

WIRED COMMUNICATION MODULE (594)

SUBSCRIBER IDENTIFICATION MODULE (596)

ANTENNA MODULE (597)

AUDIO MODULE (570)

HAPTIC MODULE (579)

SENSOR MODULE (576)

CAMERA MODULE (580)

INTERFACE (577)

CONNECTING TERMINAL (578)

SECOND NETWORK (599)

ELECTRONIC DEVICE (504)

FIRST NETWORK (598)

ELECTRONIC DEVICE (502)

SERVER (508)

FIG.4

FIG.5

START

RECEIVE UTTERANCE ~ 601

VERIFY SPEAKER ~ 603

REGISTERED USER? 605

NO

YES

TRAIN SPEAKER VERIFICATION MODEL ~ 607

END

FIG.6

FIG.7

START

RECEIVE UTTERANCE ~ 801

REQUEST TO PERFORM BIOMETRIC RECOGNITION ⌐ 813

HAS BIOMETRIC RECOGNITION BEEN PERFORMED? 803

NO

YES

OBTAIN SPEAKER VERIFICATION SCORE ~ 805

HAS SPEAKER VERIFICATION SCORE CONDITION BEEN MET? 807

NO

YES

OBTAIN/APPLY WEIGHT ~ 809

TRAIN SPEAKER VERIFICATION MODEL ~ 811

END

FIG.8

100 (501)

901 — < Wakeup command registration

-Command should be
 3 to 5 characters.

-Speak in constant speed.

-Speak loudly and correctly
 in quiet place

| Later | Start |

902    903

FIG.9A

100 (501)

Set your own wakeup
command.

905

Later

FIG.9B

100 (501)

"Hi Bixby" again. 907

Later

FIG.9C

100 (501)

< Automatic additional learning

909 ~ Would you like to use
automatic additional learning?

| YES | NO |

910                911

# FIG.9D

EP 4 195 202 B1

FIG.10A

35

100 (501)

**** **** **** **** 1234

03/19

1001

# FIG.10B

100 (501)

09:56

FIG.11A

100 (501)

09:56

Unlock your phone to
use Bixby.

1101

# FIG.11B

100 (501)

Identity verification

Verify yourself by
using fingerprint.

Cancel

1103

FIG.11C

FIG.12

**EP 4 195 202 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9262612 B2